# EUROPEAN PATENT SPECIFICATION

(11) **EP 3 748 050 B1**
(45) Date of publication and mention of the grant of the patent: **08.02.2023**
(21) Application number: 18930665.7
(22) Date of filing: 29.08.2018
(51) Int. Cl.: D01F 6/92, D01F 1/10, D01F 1/07, D01D 5/08, D01F 1/09, D01F 11/08, D01F 6/62, C08H 7/00

(54) **PLANT EXTRACT-CONTAINING POLYESTER FIBER**
PFLANZENEXTRAKT ENTHALTENDE POLYESTERFASER
FIBRE DE POLYESTER CONTENANT UN EXTRAIT DE PLANTE

(30) Priority: 22.08.2018 CN 201810957333
(43) Date of publication of application: 09.12.2020
(73) Proprietor: SINOTECH ACADEMY OF TEXTILE (QINGDAO) CO., LTD., Qingdao, Shandong 266000 (CN); Bestee Material (Tsingtao) Co., Ltd., Qingdao, Shandong 266000 (CN)
(72) Inventor: HUANG, Xiaohua, Qingdao, Shandong 266000 (CN); ZHEN, Li, Qingdao, Shandong 266000 (CN); HUANG, Xiaoqian, Qingdao, Shandong 266000 (CN); HUANG, Xiaolong, Qingdao, Shandong 266000 (CN); LIU, Yu, Qingdao, Shandong 266000 (CN)
(74) Representative: Patentanwälte Gierlich & Pischitzis Partnerschaft mbB
(86) International application number: PCT/CN2018/103019
(87) International publication number: WO 2020/037699

(56) References cited:
- WO-A1-2016/068398
- CN-A- 102 191 585
- CN-A- 102 191 585
- CN-A- 102 443 866
- CN-A- 105 239 201
- CN-A- 105 239 201
- CN-A- 106 192 057

## Description

### TECHNICAL FIELD

The present invention relates to the technical field of synthetic fibers, and specifically relates to a plant extract-containing polyethylene terephthalate fiber.

### BACKGROUND

" 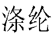 (Dilun)" is an important kind of synthetic fiber and is the product name of polyethylene terephthalate fiber in China. It has the features of solid and durable, good elasticity, not easily deformed, corrosion-resistant, insulative, stiff and smooth, and quick-drying washable. Polyethylene terephthalate is the most productive and the most widely used synthetic fiber in the world, accounting for greater than 60% of the world's synthetic fiber production.

The plant extract-containing polyethylene terephthalate fiber has a wide application prospect in theory because it has both the functions of plant extract and the properties of polyethylene terephthalate fiber itself. But in actual preparation, it mainly has the following defects: (1) when used in admixture with other functional materials, the original characters of polyethylene terephthalate are prone to be changed, which directly affects the dry heat shrinkage rate, breaking strength, elastic elongation rate, and wear resistance of the polyethylene terephthalate fiber; (2) the compatibility between functional materials is poor, thus affecting the functions of functional materials. Therefore, it limits the application space of polyethylene terephthalate fiber to some degree. So it is urgent to change the formulation and preparation method of the existing polyethylene terephthalate fiber and improve its properties to meet the diverse demands of society.

Chinese Patent CN201610591164.5, the title of the invention is SEA MUD-CONTAINING SHEATH-CORE POLYETHYLENE TEREPHTHALATE FIBER AND PREPARATION METHOD THEREOF, wherein the fiber comprises a sheath layer and a core layer; the outside of the core layer is enclosed with the sheath layer uniformly; the sheath layer comprises the following raw materials by the weight percentages: polyethylene terephthalate pellets 80-97%, sea mud/plant derived complex 2.7-18%, and coupling agent 0.3-2%; the core layer comprises the following raw materials by the weight percentages: polyethylene glycol terephthalate 95-98.5%, Pyramid Chinese Juniper seed oil 1.4-3.5%, diisooctyl diphenylamine 0.1-1.5%; the raw materials of the sheath layer accounts for 20-60% of the total weight of fiber, and the raw materials of the core layer accounts for 80-40% of the total weight of fiber. In this patent, it is mainly through a composite spinning process to produce a sea mud-containing sheath-core composite polyethylene terephthalate fiber. As the sheath-core structure of the polyethylene terephthalate fiber produced by this method is clearly segmented, the fiver is prone to fibrillation during use, causing reduced fiber strength, poor use stability and poor wear resistance.

CN 105239201 A discloses a toothbrush filament, containing PET, a natural antimicrobial agent, pomegranate seed oil, and a coupling agent. The natural antimicrobial agent is prepared from 75-90% of loess powder (a mix of quartz, feldspars, micas, and calcium carbonate), 4-10 % of commelina communis extract, 3.5-9% of houttuynia cordata extract, and 2.5-6% of Cary opteri dis lncanae extract. The preparation process of the natural antimicrobial agent (i.e., a plant extract functional additive) comprises adding deionized water that is 3-9 times the weight of the loess powder, then adding sodium hexametaphosphate which is 0.2-3% the weight of the loess powder and ammonium polyacrylate which is 0.1-1 .5% the weight of the loess powder for dispersion for 1-3 hours, and adding formula amount of plant extract for ultrasonic processing. The spinning process comprises putting a polymer, the pomegranate seed oil, and the coupling agent in a high-speed stirrer for stirring, then adding the natural antimicrobial agent, feeding the same into a twin screw machine for extrusion and pelletization and drying, then feeding the pellets into a melt spinning machine for melt spinning, cooling shaping and cutting.

The subject matter CN 105239201 A does not comprise calcium carbide powder, liuhuan stone powder, halloysite powder, AGE, an organic acid salt, chromium sulfate, a dispersant, a surface-active phospholipid, a plasticized starch, chitosan, a wetting agent, CMC-Na, and an antistatic agent.

CN102191585 A discloses an antimicrobial anion composite functional polyester staple fiber which may contain polyester staple fiber comprises: 1 to 25 portions of Anion A 1010, 0 to 25 portions of active components (bamboo charcoal or white bamboo charcoal), 50 to 96 portions of polyethylene terephthalate (PET) with high viscosity, 0 to 12 portions of a coupling agent, 0 to 10 portions of an anion spin finish aid and 0 to 10 portions of a colorant. The Anion comprises liuhuan stone powder (hexacyclic stone) and tourmaline, and is obtained by means of ball-milling. A surface active agent may be present.

Although both CN 105239201 A and CN102191585 A discloses the combination of plant extract to PET to some extend, no detailed portion of each ingredient are given. Neither the enhanced technical effects are disclosed to show the influence of portion. Moreover, CN 105239201 has the technical purpose for dental filament, which is different from CN102191585 A

Based on the above reasons, it is of great significance to propose a polyethylene terephthalate fiber with good plant functionality, high wear resistance, good dry heat shrinkage rate and breaking strength.

### SUMMARY

To solve the technical problems existing in the prior art, the present invention provides a plant extract-containing polyethylene terephthalate fiber to achieve the following objectives:

The plant extract-containing polyethylene terephthalate fiber of the invention will not change the original characters of the product when used in admixture with other raw materials, has good dry heat shrinkage rate, breaking strength and elastic elongation rate, great improved wear resistance and flame resistance, non-toxic and non-flammable, is able to effectively control the spread of fire, safe and environmentally friendly.

To solve the above technical problems, the following technical scheme is employed:

A plant extract-containing polyethylene terephthalate fiber, wherein, the raw materials comprise liuhuan stone powder, halloysite powder and a surface-active phospholipid.

As a preferred technical scheme of the invention, the plant extract-containing polyethylene terephthalate fiber consists of the following raw materials: polyethylene terephthalate pellets, calcium carbide powder, liuhuan stone powder, halloysite powder, a plant extract functional additive, AGE, an organic acid salt, chromium sulfate, a dispersant, a surface-active phospholipid, a plasticized starch, chitosan, a wetting agent, CMC-Na and an antistatic agent.
according to claim 1, the plant extract-containing polyethylene terephthalate fiber consists of the following raw materials in parts by weight: 280-300 parts of polyethylene terephthalate pellets, 3-7 parts of calcium carbide powder, 2-6 parts of liuhuan stone powder, 2-5 parts of halloysite powder, 10-12 parts of plant extract functional additive, 8 parts of allyl glycidyl ether (AGE), 2-6 parts of organic acid salt, 0.2 parts of chromium sulfate, 4-8 parts of dispersant, 9-12 parts of surface-active phospholipid, 8 parts of plasticized starch, 10 parts of chitosan, 10 parts of wetting agent, 24 parts of CMC-Na and 12 parts of antistatic agent.

Preferably, as a preferred technical scheme of the invention, the plant extract-containing polyethylene terephthalate fiber consists of the following raw materials: 290 parts of polyethylene terephthalate pellets, 3 parts of calcium carbide powder, 4 parts of liuhuan stone powder, 3 parts of halloysite powder, 11 parts of plant extract functional additive, 8 parts of AGE, 4 parts of organic acid salt, 0.2 parts of chromium sulfate, 6 parts of dispersant, 10 parts of surface-active phospholipid, 8 parts of plasticized starch, 10 parts of chitosan, 10 parts of wetting agent, 24 parts of CMC-Na and 12 parts of antistatic agent.

As a preferred technical scheme of the invention, the plant extract functional additive comprises a plant extract; the plant extract consists of Sarcandra glabra extract, mugwort extract, snow lotus extract, and seaweed extract, the ratio thereof being 5:1:1:2;
The plant extract functional additive is prepared by a method (not within the scope of the claims) comprising the following steps:
A. Lignin is dissolved in a sodium hydroxide solution, and stirred uniformly for 12-16 min, glacial acetic acid is then added to adjust pH to 2-3, laccase and lignin peroxidase are added and stirred for 3-8 min, the temperature is increased to 30-40°C and kept for 10-20 min; glacial acetic acid is then added to adjust pH to 1-2, and ethylenediamine is then added to react in a warm water bath for 100-150 min;
B. Upon the reaction is completed, sodium hydroxide is added to adjust pH to 4-5, the plant extract is added at a certain mass proportion and mixed with a stirrer, then processed by ultrasonication twice to disperse uniformly; the time for the first ultrasonication is 20-25 min, and the ultrasonic frequency is 50-100 KHz; the time for the second ultrasonication is 45-60 min, and the second ultrasonic frequency is 100-120 KHz;
C. After dispersion, ammonium ceric nitrate is added, the temperature is increased to 80-85°C to continue the reaction for 50-120 min, and finally the reactants are washed, purified, and dried in vacuum to obtain the plant extract functional additive.

Further, the amount of lignin added is 5-20% of the mass of the plant extract functional additive; the amount of the plant extract added is 70-120% of the mass of lignin; the amount of laccase added is 1.3-1.5% of the mass of lignin; and the amount of lignin peroxidase added is 0.7-1.5% of the mass of lignin;
The amount of ammonium ceric nitrate added is 0.7-2.5% of the mass of the plant extract;
The amount of ethylenediamine added is 150-200% of the mass of lignin; and
The temperature of the water bath is 65-75°C.

The polyethylene terephthalate fiber is prepared by firstly modifying lignin, then introducing organic amine groups onto the surface of lignin groups, and grafting onto the benzene ring of lignin as an ether bond. Due to the three-dimensional network structure on the surface of lignin, especially the modified lignin tends to absorb plant extract more easily, and as the carrier of the plant extract, closely combine the plant extract with the polyethylene terephthalate fiber, as well as integrate the functions of lignin and plant extract in the prepared polyethylene terephthalate fiber.

Sarcandra glabra extract is the extract of leaves and branches of Sarcandra glabera, which belongs to dicotyledon of Chloranthaceae, English name: Sarcandra Glabra Extract, containing istanbulin A, isofraxiden, fumaric acid, succinic acid, flavonoid glycosides and coumarin derivatives. It has the effects of treating pneumonia, acute appendicitis, acute gastroenteritis, bacillary dysentery, rheumatic pain, traumatic injuries, fracture, and tumors, and is commercially available.

Mugwort extract is the extract of a Chinese traditional medicine, folium artemisiae argyi, containing volatile oil, flavonoids, triterpenes, Eucalyptus alkanes, microelements as well as tannins, and polysaccharides, its main active ingredients are volatile oil and flavonoids. It has a variety of pharmacological activities including antibacterial action, antiviral action, eliminating phlegm, relieving cough and asthma, antianaphylaxis, anticoagulation, complement activation, sedation, eliminating cold to stop pain, warming channel for arresting bleeding, and external treatment for skin itching, and is commercially available. Wherein, the mugwort extract is yellow-brown powder, with the particle size of 400 meshes and a flavone content > 28.6%;

Snow lotus extract is the extract of a Chinese traditional medicine, snow lotus, containing flavonoids, coumarins, anthraquinones and sesquiterpenoids. It has a variety of healthcare functions and is commercially available. Wherein, the content of rutin is 6.3-12.2%, the content of snow lotus lactone is 0.1-6.8%, the content of alkaloids is 0.1-5.0%, the content of volatile oil is 2.5%, and the content of polysaccharides is 8.5-15.6%;

Sesmollient is the extract of the ala body of Sargassum pallidum (Turn.) C. Ag. Or S.fusiforme. (Harv.) Setch., and is commercially available. It contains alginic acid, crude protein, vitamins, enzymes and microelements, carries lots of negative ions, and also can stimulate fibroblasts to produce collagen and elastin, and promotes skin metabolism, anti-wrinkle and antiaging, improves the hematopoietic function of skin surface, and can be used to skin in vitro for bacteriostatic action. Wherein, for the seaweed extract, the content of protein is 51.4-58.3%, the content of seaweed iodine is 2.4-9.6%, and the content of mannitol is 1.0-10.2%;

For the Sarcandra glabra extract, the content of fiber is ≤ 5.8%, and the content of isofraxiden is 2.8%;

For the CMC-Na, the content of active ingredients is ≥ 99.2%, and the 1% aqueous suspension has a pH of 8.2.

As a preferred technical scheme of the invention, the organic acid salt consists of sodium acetylsalicylate, sodium humate and zinc amino gluconate, the mass ratio thereof being 3:1:4;

The wetting agent is a solution of polyether modified dimethyl siloxane copolymer, of which the mass percentage concentration is 22%, and the solvent is xylene;

The surface-active phospholipid, of which the color < 10, the 10% aqueous solution has a pH of 5.0-7.2, and the solid content is 41.0±1.2%;

The halloysite powder, in which the content of Al₂O₃ is 68.06-69.00%, the content of SiO₂ is 16.03-17.22%, the content of K₂O is 1.07%, the content of Na₂O is 10.06%, and the content of Fe₂O₃ is 0.77%.

For the above described plant extract-containing polyethylene terephthalate fiber, the fiber is prepared by a method (not within the scope of the claims) comprising the following steps:
(1) Chromium sulfate is added into the organic acid salt, stirred at 95°C for 12 min, and cooled to 50°C, a dispersion machine is initiated to adjust the rotation speed to 800 rad/min, to obtain the component A;
(2) Mixing and grinding: by weight fractions, calcium carbide powder, liuhuan stone powder, and halloysite powder are placed into a sand mill, the sand mill is initiated for grinding with the temperature controlled below 40°C, until the particle size is ≤ 10 µm, then AGE and a wetting agent are added to disperse for 25 min, to obtain the component B;
(3) Chitosan with a molecular weight of 200,000 or below is dissolved in water, into which are sequentially added a plant extract functional additive, a surface-active phospholipid, a plasticized starch, CMC-Na and an antistatic agent at an amount of one third of the total mass, the mixture is subjected to infrared-ultrasonication for 25 min, to obtain the component C;
(4) Polyethylene terephthalate pellets are heated to be fused, into which are sequentially added the component B, the component C and the component A and mixed, then sequentially added the dispersant and the remaining antistatic agent slowly, and stirred at a rotation speed of 1050-1100 rad/min for 20 min, and finally subjected to a process of melt spinning to obtain the plant extract-containing polyethylene terephthalate fiber of the invention.

As a preferred technical scheme of the invention, for the infrared-ultrasonication, the infrared wavelength is 3.6 µm; the ultrasonic frequency is 95 KH; and the time of infrared-ultrasonication is 25 min.

As a preferred technical scheme of the invention, for the melt spinning, the temperature of melt spinning is 272°C, the speed of quenching air is 0.6 m/s, and the winding spinning velocity is 4200 m/min; the fiber strand rate is 0.0002%, and the stiff fiber rate is 0.0001%.

### Due to the above technical scheme, the present invention can achieve the following technical effects:

Various indexes of the plant extract-containing polyethylene terephthalate fiber of the invention have reached the normal indexes required by polyethylene terephthalate fibers. When the plant extract-containing polyethylene terephthalate fiber is used in admixture with other raw materials, the original characters of the product will not be changed. The resultant polyethylene terephthalate fiber has a relatively high dry heat shrinkage rate, breaking strength and elastic elongation rate, as well as improved wear resistance, non-toxic and non-flammable, is able to effectively control the spread of fire, safe and environmentally friendly; Specifically:
(1) For the plant extract-containing polyethylene terephthalate fiber prepared in the present invention, the dry heat shrinkage rate is 2.1-3.3%;
(2) For the plant extract-containing polyethylene terephthalate fiber prepared in the present invention, the breaking strength is 6.2-7.5 cN/dtex;
(3) For the plant extract-containing polyethylene terephthalate fiber prepared in the present invention, the wear resistance is high, with a loss of 0.001-0.002 g/cm² after 2000 times through the wear-resisting reciprocating testing machine;
(4) For the plant extract-containing polyethylene terephthalate fiber prepared in the present invention, it has good fire-proof performance and strong flame resistance, the total burning time is 0.8-1.4 s; and the LOI value is 57-65%;
(5) For the plant extract-containing polyethylene terephthalate fiber of the invention, the mite repelling ratio is 88.4-92.1%; the mould proofing level is Level 0-2; the antibacterial rate against Escherichia coli is 97.3-99.5%; the antibacterial rate against Staphylococcus aureus is 96.4-99.9%; keeping a good durable and uniform negative ion generation;
(6) For the plant extract-containing polyethylene terephthalate fiber of the invention, the negative ion generation has a lasting effect, with improved durability and uniformity; after conventional washing for 50 times, the generation rate of negative oxygen ions is 83.1-94.2% of the original.

### DESCRIPTION OF THE EMBODIMENTS

### Embodiment 1 A plant extract-containing polyethylene terephthalate fiber, which is prepared by the method comprising the following steps:

A plant extract-containing polyethylene terephthalate fiber, specifically comprising the following raw materials in parts by weight:
280 parts of polyethylene terephthalate pellets, 4 parts of calcium carbide powder, 2 parts of liuhuan stone powder, 2 parts of halloysite powder, 10 parts of plant extract functional additive, 8 parts of AGE, 2 parts of organic acid salt, 0.2 parts of chromium sulfate, 4 parts of dispersant, 9 parts of surface-active phospholipid, 8 parts of plasticized starch, 10 parts of chitosan, 10 parts of wetting agent, 24 parts of CMC-Na and 12 parts of antistatic agent;
The organic acid salt consists of sodium acetylsalicylate, sodium humate and zinc amino gluconate at a mass ratio of 3:1:4;
The wetting agent is a solution of polyether modified dimethyl siloxane copolymer, of which the mass percentage concentration is 22%, and the solvent is xylene;
The surface-active phospholipid, of which the color < 10, the pH of 10% aqueous solution is 5.0-7.2, and the solid content is 41.0±1.2%;
The plasticized starch is a kind of carboxymethyl starch ether, of which the viscosity (5% aqueous solution, 20°C) is 20100 - 20200 mPa.s, and the pH (2% aqueous solution) is 8-10.5;
Hhalloysite, found in nature mainly in a form of nanotube with a hollow structure, which is a kind of silicate mineral. For the halloysite powder of the invention, the whiteness is 81, the whiteness after calcination at 1400°C is > 91, the refractoriness is > 1750°C, the diameter is 0.1-0.4 µm, the length is < 0.5 µm; for the halloysite powder, the content of Al₂O₃ is 68.06-69.00%, the content of SiO₂ is 16.03-17.22%, the content of K₂O is 1.07%, the content of Na₂O is 10.06%, and the content of Fe₂O₃ is 0.77%;
The dispersant consists of sodium tripolyphosphate, sodium hexametaphosphate and sodium pyrophosphate, the mass ratio of sodium tripolyphosphate, sodium hexametaphosphate and sodium pyrophosphate is 5:7:1;
The plant extract functional additive comprises a plant extract; the plant extract consists of Sarcandra glabra extract, mugwort extract, snow lotus extract, and seaweed extract, the ratio thereof being 5:1:1:2;
The plant extract functional additive is prepared by a method comprising the following steps:
   A. Lignin is dissolved in a sodium hydroxide solution, and stirred uniformly for 13 min, glacial acetic acid is then added to adjust pH to 2, laccase and lignin peroxidase are added and stirred for 5 min, the temperature is increased to 35°C and kept for 10-20 min; glacial acetic acid is then added to adjust pH to 2, and ethylenediamine is then added to react in a warm water bath for 100 min;
   B. Upon the reaction is completed, sodium hydroxide is added to adjust pH to 4, the plant extract is added at a certain mass proportion and mixed with a stirrer, then processed by ultrasonication twice to disperse uniformly; the time for the first ultrasonication is 20 min, and the ultrasonic frequency is 50 KHz; the time for the second ultrasonication is 45 min, and the second ultrasonic frequency is 100 KHz;
   C. After dispersion, ammonium ceric nitrate is added, the temperature is increased to 80°C to continue the reaction for 60 min, and finally the reactants are washed, purified, and dried in vacuum to obtain the plant extract functional additive.

Further, the amount of lignin added is 12% of the mass of the plant extract functional additive; the amount of the plant extract added is 85% of the mass of lignin; the amount of laccase added is 1.3% of the mass of lignin; the amount of lignin peroxidase added is 1.0% of the mass of lignin;
the amount of ammonium ceric nitrate added is 1.5% of the mass of the plant extract;
the amount of ethylenediamine added is 150% of the mass of lignin;
the temperature of the water bath is 65°C.

The Sarcandra glabra extract, in which the content of fiber is ≤ 5.8%, the content of isofraxiden is 2.8%;
The mugwort extract, yellow-brown powder, of which the particle size is 400 meshes, and the content of flavone is > 28.6%;
The snow lotus extract, in which the content of rutin is 6.3-12.2%, the content of snow lotus lactone is 0.1-6.8%, the content of alkaloid is 0.1-5.0%, the content of volatile oil is 2.5%, and the content of polysaccharide is 8.5-15.6%;
The seaweed extract, in which the content of protein is 51.4-58.3%, the content of seaweed iodine is 2.4-9.6%, and the content of mannitol is 1.0-10.2%;
The CMC-Na, in which the content of active ingredients is ≥ 99.2%, and the 1% aqueous suspension has a pH of 8.2.
AGE is allyl glycidyl ether, CAS No. 106-92-3, purchased from Shanghai Haohua Chemical Co. LTD.

### The plant extract-containing polyethylene terephthalate fiber of the invention is prepared by a method (not within the scope of the claims) mainly comprising the following steps:

(1) Chromium sulfate is added into the organic acid salt, stirred at 95°C for 12 min, and cooled to 50°C, a dispersion machine is initiated to adjust the rotation speed to 800 rad/min, to obtain the component A;
(2) Mixing and grinding: calcium carbide powder, liuhuan stone powder, and halloysite powder are placed into a sand mill, the sand mill is initiated for grinding with the temperature controlled below 40°C, until the particle size is ≤ 10 µm, then AGE and a wetting agent are added to disperse for 25 min, to obtain the component B;
(3) Chitosan with a molecular weight of 200,000 or below is dissolved in water, into which are sequentially added a plant extract functional additive, a surface-active phospholipid, a plasticized starch, CMC-Na and an antistatic agent at an amount of one third of the total mass, the mixture is subjected to infrared-ultrasonication for 25 min at a infrared wavelength of 3.6 µm and an ultrasonic frequency of 95 KH, to obtain the component C;
(4) Polyethylene terephthalate pellets are heated to be fused, into which are sequentially added the component B, the component C and the component A obtained from steps (2), (3) and (1) respectively and mixed, then sequentially added the dispersant and the remaining antistatic agent slowly, and stirred at a rotation speed of 1050-1100 rad/min for 20 min, and finally subjected to a process of melt spinning to obtain the plant extract-containing polyethylene terephthalate fiber of the invention.

For the melt spinning, the temperature of melt spinning is 272°C, the cooling air temperature of quenching air is 25°C, the speed of quenching air is 0.6 m/s, the winding spinning velocity is 4200 m/min, and the draft ratio is 4.3 to enable continuous spinning and no broken filament appearance; the fiber strand rate is 0.0002%, and the stiff fiber rate is 0.0001%, with good spinnability.

Embodiments 2-6, a plant extract-containing polyethylene terephthalate fiber, of which the formulation and preparation method are the same as in embodiment 1, except that the weight parts of the following formulations are different, particularly see Table 1.

**Table 1**

| | Embodiment 2 | Embodiment 3 | Embodiment 4 | Embodiment 5 | Embodiment 6 |
|---|---|---|---|---|---|
| Polyethylene terephthalate pellets | 290 | 300 | 290 | 290 | 290 |
| Calcium carbide powder | 3 | 4 | 5 | 3 | 4 |
| Liuhuan stone powder | 4 | 6 | 0 | 4 | 4 |
| Halloysite powder | 3 | 5 | 0 | 3 | 3 |
| Plant extract | 11 | 12 | 11 | 11 | 11 |
| Organic acid salt | 4 | 6 | 4 | 0 | 4 |
| Dispersant | 6 | 8 | 6 | 0 | 6 |
| Surface-active phospholipid | 10 | 12 | 11 | 10 | 0 |

### Embodiment 7 A plant extract-containing polyester fiber, the preparation method of which includes:

The formulation and weight parts of the plant extract-containing polyethylene terephthalate fiber in embodiment 7 of the invention are basically the same as in embodiment 2, except that the preparation method of embodiment 7 mainly includes the following steps:
(1) Chromium sulfate is added into the organic acid salt, stirred at 95°C for 12 min, and cooled to 50°C, a dispersion machine is initiated to adjust the rotation speed to 800 rad/min, to obtain the component A;
(2) Mixing and grinding: calcium carbide powder, liuhuan stone powder, and halloysite powder are placed into a sand mill, the sand mill is initiated for grinding with the temperature controlled below 40°C, until the particle size is ≤ 10 µm, then AGE and a wetting agent are added to disperse for 25 min, to obtain the component B;
(3) Chitosan with a molecular weight of 200,000 or below is dissolved in water, into which are sequentially added a plant extract functional additive, a surface-active phospholipid, a plasticized starch, CMC-Na and an antistatic agent at an amount of one third of the total mass, the mixture is only subjected to ultrasonication with an ultrasonic frequency of 95 KH for 25 min, to obtain the component C;
(4) Polyethylene terephthalate pellets are heated to be fused, into which are sequentially added the component B, the component C and the component A obtained from steps (2), (3) and (1) respectively and mixed, then sequentially added the dispersant and the remaining antistatic agent slowly, and stirred at a rotation speed of 1050-1100 rad/min for 20 min, and finally subjected to a process of melt spinning to obtain the plant extract-containing polyethylene terephthalate fiber of the invention.

For the melt spinning, the temperature of melt spinning is 275°C, the cooling air temperature of quenching air is 25°C, the speed of quenching air is 0.6 m/s, the winding spinning velocity is 3160 m/min, and the draft ratio is 4.3, broken filaments are prone to occur; the fiber strand rate is 0.0015%, and the stiff fiber rate is 0.001%, with poor spinnability.

### Effect indexes of the plant extract-containing polyethylene terephthalate fibers prepared in embodiments 1-7

Effect indexes of the plant extract-containing polyethylene terephthalate fibers prepared in embodiments 1-7 of the invention are specifically shown in Table 2.

**Table 2:**

| | Dry heat shrinkage rate (%) | Breaking strength (cN/dtex) | Elasticity modulus (cN/dtex) | Wear loss (g) | Flame resistance (s) | LOI value (%) |
|---|---|---|---|---|---|---|
| Embodiment 1 | 2.6 | 6.2 | 94 | 0.001 | 1.1 | 58 |
| Embodiment 2 | 2.1 | 7.5 | 98 | 0.001 | 0.8 | 65 |
| Embodiment 3 | 2.7 | 6.6 | 98 | 0.002 | 1.2 | 57 |
| Embodiment 4 | 2.5 | 6.8 | 76 | 0.02 | 1.1 | 61 |
| Embodiment 5 | 2.7 | 6.4 | 60 | 0.003 | 1.4 | 56 |
| Embodiment 6 | 2.4 | 6.2 | 72 | 0.005 | 1.0 | 57 |
| Embodiment 7 | 3.6 | 6.7 | 95 | 0.001 | 1.0 | 53 |

| | | | | | | |
|---|---|---|---|---|---|---|
| Note: The determination of flame resistance is to measure with the total burning time (UL94, vertical burning, 1.6 mm); LOI values are detected according to the standard of JISK7201-Limit Oxygen Index; | | | | | | |

It is shown from the data in Table 2 that various indexes of the plant extract-containing polyethylene terephthalate fiber of the invention have reached the normal indexes required by polyethylene terephthalate fibers. When the plant extract-containing polyethylene terephthalate fiber is used in admixture with other functional materials, the original characters of the product will not be changed. The polyethylene terephthalate fiber obtained in the invention has relatively suitable dry heat shrinkage rate, breaking strength and elastic elongation rate, as well as greatly improved wear resistance, non-toxic and non-flammable, is able to effectively control the spread of fire, safe and environmentally friendly; as can be seen from the above table, embodiment 2 is the most preferable scheme.

Of course it should be noted that the inventor has done a lot of experiments and creative work on the addition amount of each component in the preparation process of the polyethylene terephthalate fiber, among which only some cases are listed in Table 2 to illustrate the added ingredients and contents thereof in the invention are an unconventional choice. This choice is a non-obvious conclusion reached by the inventor through a lot of experiments as well as exploring and summarizing. Since exhaustive enumeration is obviously impossible, no further enumeration is provided. In conclusion, combined with the overall effect shown in Table 2, it can be seen that the function of the polyethylene terephthalate fiber prepared in embodiment 2 is the most preferable.

The plant extract-containing polyethylene terephthalate fiber prepared in the present invention contains natural plant extract and other functional minerals, so the prepared fiber also has the functions of antibacterial and releasing negative ions. For the fabrics made with the polyethylene terephthalate fibers prepared in embodiments 1-6 of the invention, the specific test results are shown in Table 3.

**Table 3**

| | Mite repelling ratio (%) | Mould proofing Level | Antibacterial rate against Escherichia coli (%) | Antibacterial rate against Staphylococcus aureus (%) | Generation rate of negative ions (%) |
|---|---|---|---|---|---|
| Embodiment 1 | 91.5 | 1 | 98.7 | 98.5 | 86.5 |
| Embodiment 2 | 92.1 | 0 | 99.5 | 97.8 | 94.2 |
| Embodiment 3 | 88.6 | 1 | 99.1 | 98.3 | 85.0 |
| Embodiment 4 | 91.2 | 1 | 98.8 | 99.9 | 83.1 |
| Embodiment 5 | 87.7 | 1 | 99.2 | 98.1 | 84.5 |
| Embodiment 6 | 89.5 | 2 | 97.3 | 97.2 | 84.6 |
| Embodiment 7 | 88.4 | 1 | 98.5 | 96.4 | 85.1 |

Wherein, the antibacterial rates are detected by the method for detecting the antibacterial performances of textiles in GB/T20944.3-2008, that is an oscillation method; The assessment on the anti-mould properties of textiles in GBT 24346-2009 is used as the detection standard of mould resistance; and the assessment on the anti-mite properties of textiles in GBT 24253-2009 is used as the detection standard of mite repelling ratio.

It is shown from Table 3 that, the plant extract-containing polyethylene terephthalate fibers prepared in embodiments 1-7 of the invention have good antibacterial properties and mite repelling properties, as well as good persistent negative ion generation.

It can be seen by combining the results from Tables 2-3 that:
(1) For the plant extract-containing polyethylene terephthalate fiber of the invention, the dry heat shrinkage rate is 2.1-3.3%;
(2) For the plant extract-containing polyethylene terephthalate fiber of the invention, the breaking strength is 6.2-7.5 cN/dtex;
(3) For the plant extract-containing polyethylene terephthalate fiber of the invention, the wear resistance is high, with a loss of 0.001-0.002 g/cm² after 2000 times through the wear-resisting reciprocating testing machine;
(4) For the plant extract-containing polyethylene terephthalate fiber of the invention, it has good fire-proof performance and strong flame resistance, the total burning time is 0.8-1.4 s; and the LOI value is 57-65%;
(5) For the plant extract-containing polyethylene terephthalate fiber of the invention, the mite repelling ratio is 88.4-92.1%; the mould proofing level is Level 0-2; the antibacterial rate against Escherichia coli is 97.3-99.5%; the antibacterial rate against Staphylococcus aureus is 96.4-99.9%; keeping a good durable and uniform negative ion generation;
(6) For the plant extract-containing polyethylene terephthalate fiber of the invention, the negative ion generation has a lasting effect, with improved durability and uniformity; after conventional washing for 50 times, the generation rate of negative oxygen ions is 83.1-94.2% of the original.

It's important to note that in the preparation of the plant extract-containing polyethylene terephthalate fiber in embodiment 7, since it is only subjected to ultrasonication and the spinning process is changed, the dry heat shrinkage rate of the prepared plant extract-containing polyethylene terephthalate fiber has been greatly changed, which is not anticipated by the invention.

Additionally, the plant extract-containing polyethylene terephthalate fiber of the invention has high surface smoothness and high brightness, and its color fastness is above grade 4. Compared with commercially available plant extract-containing polyethylene terephthalate fibers of the same kind, it has good water vapor diffusivity and hygroscopic property, easy release of condensate, easy discharge of dampness and moisture, easy drying, good hygroscopic property in daily wear and comfortable without generating static electricity.

The inventor found in experiments that the functional features of the plant extract-containing polyethylene terephthalate fiber prepared in the present invention, such as mildew resistance and antibacterial performance, are mainly determined by the content of the added plant extract. To further find out the optimal content of polyethylene terephthalate in the invention and achieve the balance between physical indexes and functional features, the inventor made a further exploration. The method of embodiment 2 is employed, in which only the proportion of Sarcandra glabra extract, mugwort extract, snow lotus extract and seaweed extract in the plant extract is changed to test the effect of the variation on the function of the prepared fiber, specifically seen in Table 4.

**Table 4**

| Proportion of Sarcandra glabra extract, mugwort extract, snow lotus extract and seaweed extract in the plant extract | Mite repelling ratio (%) | Mould proofing level | Antibacterial rate against Escherichia coli (%) | Antibacterial rate against Staphylococcus aureus (%) |
|---|---|---|---|---|
| 5:1:1:2 (Embodiment 2) | 92.1 | 0 | 99.5 | 97.8 |
| 3:1:1:2 | 88.6 | 1 | 99.4 | 97.1 |
| 4:1:1:2 | 88.7 | 1 | 94.6 | 95.6 |
| 6:1:1:2 | 92.1 | 0 | 92.5 | 91.8 |
| 5:2:1:2 | 91.6 | 0 | 94.7 | 95.1 |
| 5:1:2:2 | 91.5 | 1 | 97.4 | 94.9 |
| 5:1:1:3 | 91.8 | 1 | 93.6 | 94.5 |

The inventor has done a lot of experiments on the content of plant extract in the polyethylene terephthalate fiber, among which only some cases are listed in Table 4 to illustrate the special proportion of Sarcandra glabra extract, mugwort extract, snow lotus extract and seaweed extract in the plant extract in the polyethylene terephthalate fiber of the invention is an unconventional choice. This choice is a non-obvious conclusion reached by the inventor through a lot of experiments as well as exploring and summarizing. In conclusion, combined with the overall effect, it can be seen that the function of the polyethylene terephthalate fiber prepared in embodiment 2 is the most preferable.

### Effect indexes of the plant extract-containing polyethylene terephthalate fibers prepared in embodiments 1-7

The plant extract-containing polyethylene terephthalate fiber of the invention is woven into warp and weft 68D/24F FDY polyethylene terephthalate half-dull plain fabric, 190T. The National Standard GBT30128-2013 Textiles-Testing and evaluation for negative-ion concentration is employed to determine the negative ion-generating capacity and the high-temperature resistance performance, specifically seen in Table 5.

**Table 5**

| | Negative ion-generating capacity (/cm³) | Negative ion-generating capacity after high temperature treatment (100°C, 5h) (/cm³) |
|---|---|---|
| Embodiment 1 | 2579 | 2533 |
| Embodiment 2 | 2645 | 2642 |
| Embodiment 3 | 2621 | 2577 |
| Embodiment 4 | 2594 | 2479 |
| Embodiment 5 | 2615 | 2566 |
| Embodiment 6 | 2642 | 2612 |
| Embodiment 7 | 2638 | 1026 |

It can be seen from the data in Table 5 that:
(1) The plant extract-containing polyethylene terephthalate fiber of the invention can effectively release negative ions, which can purify air, infiltrate human skin, calm one's nerves and enhance one's resistance to illnesses;
(2) The polyethylene terephthalate fiber obtained by the preparation method of the invention are not easy to be modified after high temperature treatment, and the release effect of negative ions is not affected.

Unexpectedly, it can be seen from comparing the data between embodiment 2 and embodiment 7 that in the case of basically the same other processes, especially the same added content of calcium carbide powder, the negative ion-generating capacity of the fabric made by the plant extract-containing polyethylene terephthalate fiber prepared in embodiment 7 is decreased markedly after high temperature treatment.

### Embodiment 8

In the preparation process of the plant extract-containing polyethylene terephthalate fiber of the invention, the preparation of the plant extract functional additive is particularly important to the invention. To further illustrate the importance of relevant technical schemes, the methods of embodiments 1-7 are employed only by directly replacing the plant extract functional additives in embodiments 1-7 with plant extracts respectively, while other technical schemes remain unchanged, to determine the relevant properties of the prepared plant extract-containing polyethylene terephthalate fibers, specifically seen in Table 6.

**Table 6**

| | Dry heat shrinkage rate (%) | Breaking strength (cN/dtex) | Elasticity modulus (cN/dtex) | Wear loss (g) | Flame resistance (s) |
|---|---|---|---|---|---|
| Embodiment 9 | 2.7 | 4.2 | 95 | 0.021 | 2.5 |
| Embodiment 10 | 2.2 | 5.8 | 92 | 0.022 | 2.1 |
| Embodiment 11 | 2.6 | 4.9 | 96 | 0.026 | 2.7 |
| Embodiment 12 | 2.7 | 4.8 | 78 | 0.034 | 2.5 |
| Embodiment 13 | 2.3 | 4.7 | 65 | 0.015 | 2.1 |
| Embodiment 14 | 2.6 | 4.6 | 77 | 0.022 | 2.3 |
| Embodiment 15 | 3.3 | 4.9 | 93 | 0.019 | 2.4 |

It can be seen from Table 6 that, in the case that the methods of embodiments 1-7 are employed only by directly replacing the plant extract functional additives in embodiments 1-7 with plant extracts respectively, while other preparation processes remain unchanged, the breaking strength and wear loss of the prepared plant extract-containing polyethylene terephthalate fibers are reduced significantly; and the dry heat shrinkage rate, elasticity modulus and flame resistance of the prepared plant extract-containing polyethylene terephthalate fibers are also reduced to a certain degree. In conclusion, the overall performances of the prepared polyethylene terephthalate fibers decrease obviously without the plant extract functional additives.

## Claims

1. A plant extract-containing polyethylene terephthalate fiber, wherein:
The plant extract-containing polyethylene terephthalate fiber consists of the following raw materials: 280-300 parts of polyethylene terephthalate pellets, 3-7 parts of calcium carbide powder, 2-6 parts of liuhuan stone powder, 2-5 parts of halloysite powder, 10-12 parts of plant extract functional additive, 8 parts of allyl glycidyl ether, 2-6 parts of organic acid salt, 0.2 parts of chromium sulfate, 4-8 parts of dispersant, 9-12 parts of surface-active phospholipid, 8 parts of plasticized starch, 10 parts of chitosan, 10 parts of wetting agent, 24 parts of CMC-Na and 12 parts of antistatic agent.

2. The plant extract-containing polyethylene terephthalate fiber according to claim 1, wherein: the plant extract-containing polyethylene terephthalate fiber consists of the following raw materials: 290 parts of polyethylene terephthalate pellets, 3 parts of calcium carbide powder, 4 parts of liuhuan stone powder, 3 parts of halloysite powder, 11 parts of plant extract functional additive, 8 parts of allyl glycidyl ether, 4 parts of organic acid salt, 0.2 parts of chromium sulfate, 6 parts of dispersant, 10 parts of surface-active phospholipid, 8 parts of plasticized starch, 10 parts of chitosan, 10 parts of wetting agent, 24 parts of CMC-Na and 12 parts of antistatic agent.

3. The plant extract-containing polyethylene terephthalate fiber according to claim 2, wherein, The plant extract functional additive comprises a plant extract; the plant extract consists of Sarcandra glabra extract, mugwort extract, snow lotus extract, and seaweed extract, the ratio thereof being 5:1:1:2;
The Sarcandra glabra extract, in which the content of fiber is ≤ 5.8%, the content of isofraxiden is 2.8%;
The mugwort extract, yellow-brown powder, of which the particle size is 400 meshes, and the content of flavone is > 28.6%;
The snow lotus extract, in which the content of rutin is 6.3-12.2%, the content of snow lotus lactone is 0.1-6.8%, the content of alkaloid is 0.1-5.0%, the content of volatile oil is 2.5%, and the content of polysaccharide is 8.5-15.6%;
The seaweed extract, in which the content of protein is 51.4-58.3%, the content of seaweed iodine is 2.4-9.6%, and the content of mannitol is 1.0-10.2%;
The CMC-Na, in which the content of active ingredients is ≥ 99.2%, and the 1% aqueous suspension has a pH of 8.2.

## Patentansprüche

1. Pflanzenextrakt enthaltende Polyethylenterephthalatfaser, wobei:
die pflanzenextrakthaltige Polyethylenterephthalatfaser aus folgenden Rohstoffen besteht: 280-300 Teile Polyethylenterephthalat-Pellets, 3-7 Teile Calciumcarbidpulver, 2-6 Teile Liuhuan-Steinpulver, 2-5 Teile Halloysitpulver, 10-12 Teile funktioneller Pflanzenextraktzusatz, 8 Teile Allylglycidyl Ether, 2-6 Teile Salz einer organischen Säure, 0,2 Teile Chromsulfat, 4-8 Teile Dispergiermittel, 9-12 Teile oberflächenaktives Phospholipid, 8 Teile plastifizierte Stärke, 10 Teile Chitosan, 10 Teile Netzmittel, 24 Teile CMC-Na und 12 Teile Antistatikum.

2. Pflanzenextrakt enthaltende Polyethylenterephthalatfaser nach Anspruch 1, wobei: die Pflanzenextrakt enthaltende Polyethylenterephthalatfaser aus den folgenden Rohmaterialien besteht: 290 Teile Polyethylenterephthalatpellets, 3 Teile Calciumcarbidpulver, 4 Teile Liuhuan-Steinpulver, 3 Teile Halloysitpulver, 11 Teile funktioneller Pflanzenextraktzusatz, 8 Teile Allylglycidylether, 4 Teile Salz einer organischen Säure, 0,2 Teile Chromsulfat, 6 Teile Dispergiermittel, 10 Teile oberflächenaktives Phospholipid, 8 Teile weichgemachte Stärke, 10 Teile Chitosan, 10 Teile Netzmittel, 24 Teile CMC-Na und 12 Teile Antistatikum.

3. Pflanzenextrakt enthaltende Polyethylenterephthalatfaser nach Anspruch 2, wobei einen funktioneller Pflanzenextraktzusatz einen Pflanzenextrakt umfasst; der Pflanzenextrakt besteht aus Sarcandra Glabra-Extrakt, Beifußextrakt, Schneelotusextrakt und Algenextrakt, wobei das Verhältnis davon 5:1:1:2 beträgt; wobei
der Sarcandra Glabra-Extrakt, in dem der Gehalt an Faser ≤ 5,8 % beträgt, der Gehalt an Isofraxiden 2,8 % beträgt;
der Beifußextrakt, gelbbraunes Pulver, dessen Partikelgröße 400 Mesh beträgt und dessen Flavongehalt > 28,6 % beträgt;
der Schneelotus-Extrakt, in dem der Gehalt an Rutin 6,3-12,2% beträgt, der Gehalt an Schneelotus-Lacton 0,1-6,8% beträgt, der Gehalt an Alkaloid 0,1-5,0% beträgt, der Gehalt an ätherischem Öl 2,5% beträgt und der Gehalt an Polysaccharid 8,5-15,6 % beträgt;
der Algenextrakt, in dem der Proteingehalt 51,4-58,3 % beträgt, der Gehalt an Algenjod 2,4-9,6 % beträgt und der Gehalt an Mannit 1,0-10,2 % beträgt;
das CMC-Na, in dem der Gehalt an Wirkstoffen ≥ 99,2 % beträgt, wobei die 1 % wässrige Suspension einen pH-Wert von 8,2 hat.

## Revendications

1. Fibre de téréphtalate de polyéthylène contenant un extrait végétal, dans laquelle :
la fibre de polyéthylène téréphtalate contenant des extraits végétaux se compose des matières premières suivantes : 280-300 parties de granulés de polyéthylène téréphtalate, 3-7 parties de poudre de carbure de calcium, 2-6 parties de poudre de pierre liuhuan, 2-5 parties de poudre d'halloysite, 10-12 parties d'additif fonctionnel d'extrait de plante, 8 parties d'allyl glycidyl éther, 2 à 6 parties de sel d'acide organique, 0,2 partie de sulfate de chrome, 4 à 8 parties de dispersant, 9 à 12 parties de phospholipide tensioactif, 8 parties d'amidon plastifié, 10 parties de chitosane, 10 parties d'agent mouillant, 24 parties de CMC-Na et 12 parties d'agent antistatique.

2. Fibre de téréphtalate de polyéthylène contenant un extrait végétal selon la revendication 1, dans laquelle : la fibre de téréphtalate de polyéthylène contenant un extrait végétal est constituée des matières premières suivantes : 290 parties de granulés de polyéthylène téréphtalate, 3 parties de poudre de carbure de calcium, 4 parties de poudre de pierre liuhuan, 3 parties de poudre d'halloysite, 11 parties d'additif fonctionnel d'extrait de plante, 8 parties d'allyl glycidyl éther, 4 parties de sel d'acide organique, 0,2 parties de sulfate de chrome, 6 parties de dispersant, 10 parties de phospholipide tensioactif, 8 parties d'amidon plastifié, 10 parties de chitosane, 10 parties d'agent mouillant, 24 parties de CMC-Na et 12 parties d'agent antistatique.

3. Fibre de téréphtalate de polyéthylène contenant un extrait végétal selon la revendication 2, dans laquelle, l'additif fonctionnel d'extrait végétal comprend un extrait végétal ; l'extrait végétal est constitué d'extrait de Sarcandra glabra, d'extrait d'armoise, d'extrait de lotus des neiges et d'extrait d'algue, le rapport de ceux-ci étant de 5:1:1:2 ;
L'extrait de Sarcandra glabra, dont la teneur en fibres est ≤ 5,8 %, la teneur en isofraxiden est de 2,8 % ;
L'extrait d'armoise, poudre jaune-brun, dont la granulométrie est de 400 meshes, et la teneur en flavone > 28,6 % ;
L'extrait de lotus des neiges, dans lequel la teneur en rutine est de 6,3 à 12,2 %, la teneur en lactone de lotus des neiges est de 0,1 à 6,8 %, la teneur en alcaloïde est de 0,1 à 5,0 %, la teneur en huile volatile est de 2,5 %, et le la teneur en polysaccharide est de 8,5 à 15,6 % ;
L'extrait d'algues, dans lequel la teneur en protéines est de 51,4 à 58,3 %, la teneur en iode d'algues est de 2,4 à 9,6 % et la teneur en mannitol est de 1,0 à 10,2 % ;
La CMC-Na, dans laquelle la teneur en principes actifs est ≥ 99,2 %, et la suspension aqueuse à 1 % a un pH de 8,2.
